# EUROPEAN PATENT SPECIFICATION

(11) **EP 3 297 229 B1**
(45) Date of publication and mention of the grant of the patent: **26.08.2020**
(21) Application number: 16806513.4
(22) Date of filing: 21.01.2016
(51) Int. Cl.: H04L 12/761, H04L 12/723

(54) **USER MULTICAST ROUTING METHOD AND APPARATUS, AND EDGE DEVICE**
BENUTZER-MULTICAST-ROUTINGVERFAHREN UND -VORRICHTUNG UND EDGE-VORRICHTUNG
PROCÉDÉ ET APPAREIL DE ROUTAGE DE MULTIDIFFUSION D'UTILISATEUR ET APPAREIL PÉRIPHÉRIQUE

(30) Priority: 11.06.2015 CN 201510319369
(43) Date of publication of application: 21.03.2018
(73) Proprietor: ZTE Corporation, Shenzhen, Guangdong 518057 (CN)
(72) Inventor: ZHANG, Zheng, Shenzhen Guangdong 518057 (CN)
(74) Representative: Tiburzi, Andrea
(86) International application number: PCT/CN2016/071605
(87) International publication number: WO 2016/197615

(56) References cited:
- WO-A1-2010/051851
- CN-A- 1 937 593
- CN-A- 101 640 600
- CN-A- 102 347 908
- US-A- 5 412 654
- US-A1- 2007 217 428
- US-A1- 2014 313 967
- SHANKAR RAMAN BALAJI VENKAT VENKATASWAMI GAURAV RAINA IIT MADRAS BHARGAV BHIKKAJI DELL-FORCE10: "Securing Model-C Inter-Provider L2 VPNs with Label Hopping and TicToc; draft-mjsraman-l2vpn-vpls-tictoc-label-hop -03.txt", SECURING MODEL-C INTER-PROVIDER L2 VPNS WITH LABEL HOPPING AND TICTOC; DRAFT-MJSRAMAN-L2VPN-VPLS-TICTOC-LABEL-HOP -03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZE, 8 April 2013 (2013-04-08), pages 1-19, XP015091588, [retrieved on 2013-04-08]

## Description

### Technical Field

The present application relates to, but no limited to, the field of communication technologies, and more particularly, to a user multicast routing method, apparatus and edge device.

### Background

With the advent of multicast technologies, such as Internet Protocol Television (IPTV), video conference, multicast virtual private network (VPN), transmission of multicast streams can be well implemented through a public network. In practical applications, after a user network accesses the public network, the public network can implement bearing of user multicast traffic in the public network in manners such as multicast, multipoint extensions for label distribution protocol(mLDP) for multicast, point-to-multipoint traffic engineering (P2MP TE), etc. The public network is not required to perceive the user multicast traffic, and only provides a bearing mode. With the development of the multicast technologies in more and more application scenarios, more requirements are put forward for the sustainable development of the related art.

Due to the difference in positions of user multicast traffic sources, a number of edge devices (such as Provider's Edges (PEs)) are required to undertake an access task. According to network deployment situations, some PEs can be used as entrance devices, and may become exit devices because there are receivers. The same PE may serve multiple user networks simultaneously. Downstream exit PEs, according to multicast routing information sent by the entrance PEs, select the entrance PEs and establish public network tunnels therewith to implement the transmission of the multicast traffic.

The entrance PE assigns an upstream label, i.e., multicast routing upstream label, to multicast routing to indicate specific multicast routing information. The multicast routing upstream label is used in combination with a public network tunnel label to allow the user multicast traffic to reach the exit PE through the public network, and the exit PE then sends the routing to the right receiver according to the multicast routing upstream label.

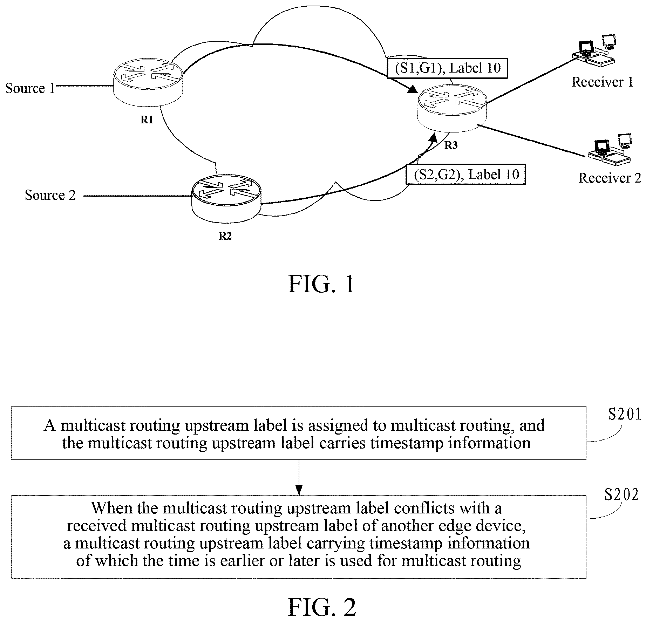

However, when multiple PEs send the multicast routing upstream labels simultaneously, there may be a problem of a label conflict, that is, the same multicast routing upstream label may be assigned by different devices such that the exit PE (e.g., R3 in FIG. 1) cannot determine which piece of the user multicast traffic the multicast routing upstream label specifically corresponds to, as shown in FIG. 1.

The document SHANKAR RAMAN BALAJI VENKAT VENKATASWAMI GAURAV RAINA IIT MADRAS BHARGAV BHIKKAJI DEL-FORCE10: "Securing Model-C Inter-Provider L2 VPNs with Label Hopping and TicToc" discloses a label-hopping technique which uses a set of randomized labels and a method for hopping amongst these labels using the time instant the packet leaves the port from a sending Provider Edge Router. To prevent the attacker from identifying the labels in polynomial time, an additional label is used.

The document US 2007/0217428 A1 discloses a method of using a point-to-point (P2P) label switched path (LSP) to transmit multicast data packets partially through a multiprotocol label switched (MPLS) network when one or more label switched routers (LSRs) of the MPLS are not multicast label distribution protocol (mLDP) enabled. The P2P LSP can be used to transmit multicast data packets to the head end of a point-to-multipoint (P2MP) LSP created with mLDP enabled LSRs. The P2MP LSP can be used to transmit the multicast data packets through the MPLS network to intended receivers that are external to the MPLS network. When configuring the P2MP LSP, an mLDP enabled LSR receives a first message from a non-mLDP enabled MPLS core router in response to sending a label mapping message to the non-mLDP enabled MPLS core router.; In response, a directed LDP session is created between the mLDP enabled LSR and an edge LSR in one embodiment in response to receiving the first message from an MPLS enabled core router. The directed LDP session can be used to transmit a label mapping message to an ingress LSR.

### Summary

This invention is defined by the appended claims. The following is a summary of the subject matter described herein in detail. This summary is not intended to limit the protection scope of the claims.

A user multicast routing method, apparatus and edge device according to independent claims are provided. Further improvements and embodiments are provided in the dependent claims.

Also provided is a user multicast routing method including:
assigning a multicast routing upstream label to multicast routing, and carrying timestamp information in the multicast routing upstream label, herein the multicast routing upstream label is used for indicating routing information of a multicast stream, and the timestamp information is used for indicating marked time of the multicast routing upstream label; and
when the multicast routing upstream label conflicts with a received multicast routing upstream label of another edge device, using a multicast routing upstream label carrying the timestamp information of which the time is earlier or later for multicast routing.

In an exemple, the method further includes:
when the time in the timestamp information corresponding to conflicted multicast routing upstream labels is the same, selecting a corresponding multicast routing upstream label for multicast routing according to an order of value sizes of Internet protocol, IP, addresses of edge devices, herein an IP address of an edge device is an IP address of an edge device which assigns a multicast routing upstream label.

In an exemple, the method further includes:
when the assigned multicast routing upstream label is not used, modifying the conflicted multicast routing upstream label.

In an exemple, the method further includes:
when the multicast routing upstream label of another edge device is not used, triggering the edge device corresponding to the conflicted multicast routing upstream label to modify the conflicted multicast routing upstream label.

In an exemple, the method further includes:
after modifying the conflicted multicast routing upstream label, advertising other edge devices.

Also provided is a user multicast routing apparatus including:
a setting unit configured to assign a multicast routing upstream label to multicast routing, and carry timestamp information in the multicast routing upstream label, herein the multicast routing upstream label is used for indicating routing information of a multicast stream, and the timestamp information is used for indicating marked time of the multicast routing upstream label; and
a routing unit configured to, when the multicast routing upstream label conflicts with a received multicast routing upstream label of another edge device, use a multicast routing upstream label carrying timestamp information of which the time is earlier or later for multicast routing.

In an exemple, the routing unit is further configured to, when the time in the timestamp information corresponding to conflicted multicast routing upstream labels is the same, select a corresponding multicast routing upstream label for multicast routing according to an order of value sizes of Internet protocol (IP) addresses of edge devices, herein an IP address of an edge device is an IP address of an edge device which assigns a multicast routing upstream label.

In an exemple, the setting unit is further configured to, when the assigned multicast routing upstream label is not used, modify the conflicted multicast routing upstream label.

In an exemple, the setting unit is further configured to, when the multicast routing upstream label of another edge device is not used, trigger the edge device corresponding to the conflicted multicast routing upstream label to modify the conflicted multicast routing upstream label.

In an exemple, the apparatus further includes an advertisement unit, herein
the setting unit is further configured to, after modifying the conflicted multicast routing upstream label, trigger the advertisement unit; and
the advertisement unit is configured to advertise other edge devices.

Also provided is an edge device including any user multicast routing apparatus described above.

Also provided is a computer readable storage medium having computer executable instructions stored therein, which, when executed, can implement the user multicast routing method.

Beneficial effects of the embodiments of the present invention are as follows.

In the examples of the present invention, when multicast routing upstream labels are published at an entrance edge device, timestamp information is added. And as a result, when a label conflict occurs, with the same judgement criterion each of the devices in the network can decide to use an earlier or later timestamp for multicast routing, thereby well solving the problem of routing confusion due to the conflict of the multicast routing upstream labels.

Other features and advantages of the examples of the present invention will be set forth in the following specification, and part of them will become obvious from the specification or be understood through implementation of this application. The objects and other advantages of the application will be implemented and obtained from structures pointed out specifically in the written specification, claims and accompanying drawings.

After the accompanying drawings and detailed description are read and understood, other aspects can be understood.

### Brief Description of Drawings

FIG. 1 is a schematic diagram of an existing user multicast routing method.
FIG. 2 is a flow chart of a user multicast routing method in accordance with an embodiment of the present invention.
FIG. 3 is a flow chart of another user multicast routing method in accordance with an embodiment of the present invention.
FIG. 4 is a structural diagram of a user multicast routing apparatus in accordance with an embodiment of the present invention.

### Detailed Description

The alternative embodiments of the present invention will be described specifically in conjunction with the accompanying drawings. The accompanying drawings form a portion of the present application, and are, together with the embodiments of the present invention, intended to explain the principle of the present application. For the purpose of clarity and simplification, the detailed specific explanation of the known functions and structures in devices described herein will be omitted when it might obscure the subject matter of the present application.

In embodiments of the present invention, when multicast routing upstream labels are published at an entrance edge device, timestamp information is added. And as a result, when a label conflict occurs, with the same judgement criterion each of the devices in the network decides to use routing with an earlier timestamp, and to advertise the edge device with later timestamp to adjust its conflicted multicast routing upstream label. Therefore, the problem of routing confusion due to the conflict of the multicast routing upstream labels is well solved. Moreover, difficulties and complications brought by manually configuring a label pool can be avoided, and network management and operation can be facilitated greatly. The technical scheme of the present application will be described in detail below through several specific embodiments.

### Method embodiment

An embodiment of the present invention provides a user multicast routing method, which, referring to FIG. 2, includes the following steps.

In step S201, a multicast routing upstream label is assigned to multicast routing, and the multicast routing upstream label carries timestamp information. Herein, the multicast routing upstream label is used for indicating routing information of a multicast stream, and the timestamp information is used for indicating marked time of the multicast routing upstream label.

During specific implementation, in the embodiment of the present invention, when the user multicast routing is sent at an entrance edge device (Provider's Edge, PE) to other PEs, the sending of the user multicast routing can be implemented in a border gateway protocol (BGP) routing advertisement manner, and when the advertisement is performed, the timestamp information is carried. Acquisition of the timestamp information is inconsistent throughout the whole network.

In step S202, when the multicast routing upstream label conflicts with a received multicast routing upstream label of another edge device, a multicast routing upstream label carrying timestamp information of which the time is earlier or later is used for multicast routing.

During specific implementation, in the step S202 of the embodiment of the present invention, an exit edge device generates forwarding table entries according to the multicast routing upstream label sent by the entrance edge device, and issues the forwarding table entries.

When finding there is a label conflict, the exit edge device in the existing art cannot select correct routing to guide forwarding. Two same labels may be issued by the way of one being covered with the other, or the last advertised label may be selected to be issued according to the order in which the routings are received. Decision-making approaches of various devices are inconsistent, thus the multicast traffic is sent to a wrong receiver. However, after the method provided by the embodiment of the present invention is used, decision result of each of the exit edge devices is the same, and the exit edge device will only select one label uniquely to issue, so the error of covered issuing will not occur.

That is, in the embodiment of the present invention, when multicast routing upstream labels are published at an entrance edge device, timestamp information is added. And as a result, when a label conflict occurs, with the same judgement criterion each of the devices in the network can decide to use multicast with an earlier timestamp for routing, and advertise an edge device with a later timestamp to adjust its timestamp information. Therefore, the problem of routing confusion due to the conflict of the multicast routing upstream labels in the existing art is well solved, and network management and operation are facilitated greatly.

Compared with the existing art in which the routing conflict problem described in the present application is solved by configuring an upstream routing label pool for different entrance edge devices, in the embodiments of the present invention, the upstream routing label pool of each of the entrance PEs does not need to be planed, configured and adjusted. Instead, the edge devices advertise the routing freely and carry the timestamp, and when the label conflict occurs, the routing with an earlier timestamp is selected preferentially, and the device with a later timestamp is advertised to modify automatically the label being sent to be other un-conflicted value.

It should be noted that in the embodiment of the present invention, when the label conflict occurs, a multicast routing upstream label carrying the timestamp information of which the time is earlier or later may be selected for multicast routing.

In an exemplary embodiment, the method in accordance with the embodiment of the present invention further includes: when the time in the timestamp information corresponding to the conflicted multicast routing upstream labels is the same, a corresponding multicast routing upstream label is selected for multicast routing according to an order of value sizes of IP addresses of edge devices. Herein an IP address of an edge device is an IP address of an edge device which assigns the multicast routing upstream label.

During specific implementation, the embodiment of the present invention may configure the multicast routing upstream label of an edge device with a larger IP address for preferential routing. Of course, those skilled in the art may also configure the multicast routing upstream label of an edge device with a smaller IP address for preferential routing. The aim is to perform multicast routing in a predefined order.

In the embodiment of the present invention, when the time in the timestamp information corresponding to the conflicted multicast routing upstream labels is the same, the corresponding multicast is triggered to perform routing according to the predefined order of the value sizes of the IP addresses of the edge devices for the routing.

In the embodiment of the present invention, the corresponding multicast routing upstream label is selected for multicast routing according to the order of the value sizes of the addresses of the edge devices to implement better the multicast routing, and to further avoid the problem of routing confusion due to the conflict of the multicast routing upstream labels.

In an exemplary embodiment, the method in accordance with the embodiment of the present invention further includes the following operations.

When the assigned multicast routing upstream label is not used, the conflicted multicast routing upstream label is modified.

When the multicast routing upstream label of another edge device is not used, the edge device corresponding to the conflicted multicast routing upstream label is triggered to modify the conflicted multicast routing upstream label.

After modifying the conflicted multicast routing upstream label, other edge devices are advertised.

That is, in the embodiment of the prevent invention, when there is a conflict in the multicast routing upstream labels, the edge device of the multicast routing upstream label that is not used is triggered to adjust dynamically the conflicted multicast routing upstream label, and re-performs an advertisement.

During the specific implementation, after the edge device receives multicast routing sent by another edge device, if the edge device finds that there is a conflict between its assigned multicast routing upstream label and the multicast routing upstream label sent by another edge device, and the timestamp information sent by the present edge device is earlier, then the present edge device does not need to adjust the label, but triggers the another edge device with the conflict label to modify the label (although all the edge devices can determine the conflict by themselves and modify their own conflicted labels, the triggering of modification of another edge device can further improve accuracy to ensure all the labels can be used for routing). If the timestamp information sent by the edge device is later, then the present edge device adjusts dynamically the conflicted label to be other un-conflicted value.

It should be noted that the edge device described in the embodiment of the present invention, which may also be called as a network device, may include an entrance edge device and an exit edge device. Or the same edge device may be used as both the entrance edge device and the exit edge device.

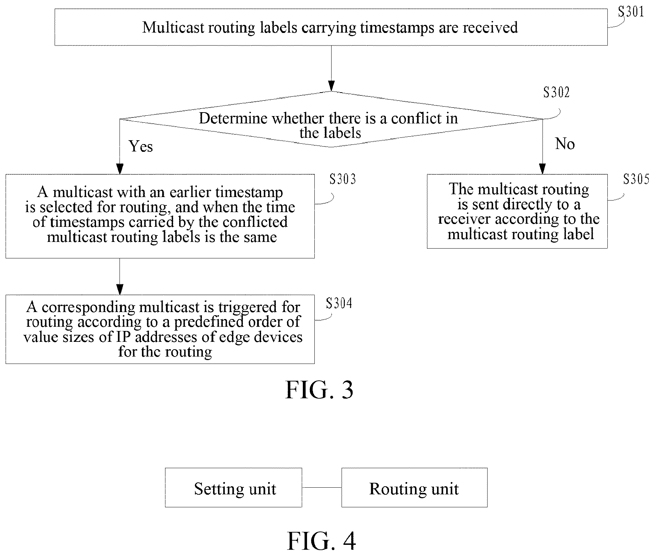

FIG. 3 is a flow chart of another user multicast routing method in accordance with an embodiment of the present invention. The method in accordance with the embodiment of the present invention will be explained and illustrated in detail below in conjunction with FIG. 3.

In step S301, multicast routing upstream labels carrying timestamps are received.

In step S302, whether there is a conflict in the labels is determined, and if no, step S305 will be executed, and if yes, step S303 will be executed.

In step S303, multicast with an earlier timestamp is selected for routing, and when the time of timestamps carried by the conflicted multicast routing upstream labels is the same, S304 will be is executed.

In step S304, the corresponding multicast is triggered for routing according to a predefined order of value sizes of IP addresses of edge devices for the routing.

In step S305, the multicast routing is sent to a receiver directly according to the multicast routing upstream label.

### Apparatus embodiment

An embodiment of the present invention further provides a user multicast routing apparatus, which, referring to FIG. 4, includes a setting unit and a routing unit coupled with each other. Function of each of the units is as follows.

The setting unit is configured to assign a multicast routing upstream label to multicast routing, and carry timestamp information in the multicast routing upstream label. Herein, the multicast routing upstream label is used for indicating routing information of a multicast stream, and the timestamp information is used for indicating marked time of the multicast routing upstream label.

The routing unit is configured to, when the multicast routing upstream label conflicts with a received multicast routing label of another edge device, use a multicast routing upstream label carrying the timestamp information of which the time is earlier or later for multicast routing.

In the embodiment of the present invention, when multicast routing upstream labels are published at an entrance edge device, timestamp information is added. And as a result, when a label conflict occurs, with the same judgement criterion each of the devices in the network can decide to use multicast with an earlier timestamp for routing, and advertise an edge device with a later timestamp to adjust its timestamp information. Therefore, the problem of routing confusion due to the conflict of the multicast routing upstream labels in the existing art is well solved, and network management and operation are facilitated greatly.

It should be noted that in the embodiment of the present invention, when the label conflict occurs, a multicast routing upstream label carrying the timestamp information of which the time is earlier or later may be selected for multicast routing.

In an exemplary embodiment, the routing unit is further configured to, when the time in the timestamp information corresponding to the conflicted multicast routing upstream labels is the same, select a corresponding multicast routing upstream label for multicast routing according to an order of value sizes of IP addresses of edge devices. Herein, the IP address of the edge device is an IP address of an edge device which assigns the multicast routing upstream label.

In the embodiment of the present invention, when the time in the timestamp information corresponding to the conflicted multicast routing upstream labels is the same, a corresponding multicast is triggered to perform routing according to the predefined order of the value sizes of the IP addresses of the edge devices for the routing.

In an exemplary embodiment, the setting unit is further configured to, when the assigned multicast routing upstream label is not used, modify the conflicted multicast routing upstream label; and when the multicast routing upstream label of the another edge device is not used, trigger the edge device corresponding to the conflicted multicast routing upstream label to modify the conflicted multicast routing upstream label.

In an exemplary embodiment, the apparatus in accordance with the embodiment of the present invention further includes an advertisement unit.

The setting unit is further configured to, after modifying the conflicted multicast routing upstream label, trigger the advertisement unit.

The advertisement unit is configured to advertise other edge devices.

The related content of the apparatus in accordance with the embodiment of the present invention may be understood with reference to the related content of other method embodiments or apparatus embodiments, and will not be repeated herein.

### Edge device embodiment

An embodiment of the present invention further provides an edge device including any apparatus described in the apparatus embodiment.

The related content in the embodiment of the present invention may be understood with reference to portion of apparatus embodiment and method embodiment, and will not be repeated herein.

In summary, the embodiments of the present invention may bring the following beneficial effects. When multicast routing upstream labels are published at an entrance edge device, timestamp information is added. And as a result, when a label conflict occurs, with the same judgement criterion each of the devices in the network can decide to use routing with an earlier timestamp, and advertise an edge device with a later timestamp to adjust its timestamp information. Therefore, the problem of routing confusion due to the conflict of the multicast routing upstream labels in the existing art is well solved, and network management and operation are facilitated greatly.

In addition, an embodiment of the present invention further provides a computer readable storage medium having computer executable instructions stored therein, which, when executed, can implement the user multicast routing method.

People having ordinary skill in the art may understand that all or part of steps in the methods described above can be carried out through the related hardware (such as processors) instructed by programs. And the programs can be stored in a computer readable storage medium, such as an only read memory, a magnetic disk or an optical disk or the like. In an exemplary embodiment, all or part of steps in the embodiments described above can also be carried out by using one or more integrated circuits. Accordingly, various modules/units in the embodiments can be implemented in the form of hardware, for example, by using an integrated circuit to implement their corresponding functions, or can be implemented in the form of a software function module, for example, by executing programs/instructions stored in a memory through a processor to implement their corresponding functions. The present application is not limited to the combination of any specific form of hardware and software.

The above are specific preferred embodiments of the present application only, but the protection scope of the present application is not limited thereto. Any variation or substitution which may occur easily to any person skilled in the art within the technical scope disclosed by the present application should be covered within the protection scope of the present application. Therefore, the protection scope of the present application should be subject to the protection scope defined by the claims.

### Industrial Applicability

The embodiments of the present invention provide a user multicast routing method, apparatus and edge device. In the embodiments of the present invention, when multicast routing upstream labels are published at an entrance edge device, timestamp information is added. And as a result, when a label conflict occurs, with the same judgement criterion each of the devices in the network can decide to use multicast with an earlier or later timestamp for routing. Therefore, the problem of routing confusion due to the conflict of the multicast routing upstream labels is well solved. Moreover, difficulties and complications brought by manually configuring a label pool can be avoided, and network management and operation can be facilitated greatly.

## Claims

1. A user multicast routing method comprising:
assigning (S201) a multicast routing upstream label to multicast routing, and carrying (S201) timestamp information in the multicast routing upstream label, wherein the multicast routing upstream label is used for indicating routing information of a multicast stream, and the timestamp information is used for indicating marked time of the multicast routing upstream label;
**characterized by** further comprising when the multicast routing upstream label conflicts with a received multicast routing upstream label of another edge device, using (S202) a multicast routing upstream label carrying timestamp information of which the time is earlier for multicast routing.

2. The method according to claim 1, further comprising:
when time in timestamp information corresponding to conflicted multicast routing upstream labels is same, selecting (S304) a corresponding multicast routing upstream label for multicast routing according to an order of value sizes of Internet protocol, IP, addresses of edge devices, wherein an IP address of an edge device is an IP address of an edge device which assigns a multicast routing upstream label.

3. The method according to claim 1 or 2, further comprising:
when the assigned multicast routing upstream label is not used, modifying the conflicted multicast routing upstream label.

4. The method according to claim 1 or 2, further comprising:
when the multicast routing upstream label of the another edge device is not used, triggering the edge device corresponding to the conflicted multicast routing upstream label to modify the conflicted multicast routing upstream label.

5. The method according to claim 3 or 4, further comprising:
after modifying the conflicted multicast routing upstream label, advertising other edge devices.

6. A user multicast routing apparatus comprising:
a setting unit configured to assign : (S201) a multicast routing upstream label to multicast routing, and carry timestamp information in the multicast routing upstream label, wherein the multicast routing upstream label is used for indicating routing information of a multicast stream, and the timestamp information is used for indicating marked time of the multicast routing upstream label;
**characterized by** further comprising a routing unit configured to, when the multicast routing upstream label conflicts with a received multicast routing upstream label of another edge device, use (S202) a multicast routing upstream label carrying timestamp information of which the time is earlier for multicast routing.

7. The apparatus according to claim 6, wherein the routing unit is further configured to, when time in timestamp information corresponding to conflicted multicast routing upstream labels is same, select a corresponding multicast routing upstream label for multicast routing according to an order of value sizes of Internet protocol, IP, addresses of edge devices, wherein an IP address of an edge device is an IP address of an edge device which assigns a multicast routing upstream label.

8. The apparatus according to claim 6 or 7, wherein the setting unit is further configured to, when the assigned multicast routing upstream label is not used, modify the conflicted multicast routing upstream label.

9. The apparatus according to claim 6 or 7, wherein the setting unit is further configured to, when the multicast routing upstream label of the another edge device is not used, trigger the edge device corresponding to the conflicted multicast routing upstream label to modify the conflicted multicast routing upstream label.

10. An edge device comprising the apparatus according to any one of claims 6-9.

11. A computer readable storage medium having computer executable instructions stored therein, which, when executed, implement the user multicast routing method according to any one of claims 1-5.

## Patentansprüche

1. Benutzer-Multicast-Routingverfahren, umfassend:
Zuweisen (S201) eines Multicast-Routing-Upstream-Labels zum Multicast Routing, und Tragen (S201) von Zeitstempelinformationen in dem Multicast-Routing-Upstream-Label, wobei das Multicast-Routing-Upstream-Label zum Angeben von Routing-Informationen eines Multicast-Stroms verwendet wird und die Zeitstempelinformationen zum Angeben von markierter Zeit des Multicast-Routing-Upstream-Labels verwendet werden;
**dadurch gekennzeichnet, dass** es, wenn das Multicast-Routing-Upstream-Label mit einem empfangenen Multicast-Routing-Upstream-Label eines anderen Edge-Geräts in Konflikt steht, weiter das Verwenden (S202) eines Multicast-Routing-Upstream-Labels umfasst, das Zeitstempelinformationen trägt, deren Zeit für Multicast-Routing früher ist.

2. Verfahren nach Anspruch 1, weiter umfassend:
wenn die Zeit in Zeitstempelinformationen, die in Konflikt stehenden Multicast-Routing-Upstream-Labels entsprechen, gleich ist, Auswählen (S304) eines entsprechenden Multicast-Routing-Upstream-Labels für Multicast-Routing gemäß einer Reihenfolge von Wertgrößen von Internet Protokoll, IP, Adressen von Edge-Geräten, wobei eine IP-Adresse eines Edge-Geräts eine IP-Adresse eines Edge-Geräts ist, die ein Multicast-Routing-Upstream-Label zuweist.

3. Verfahren nach Anspruch 1 oder 2, weiter umfassend:
wenn das zugewiesene Multicast-Routing-Upstream-Label nicht verwendet wird, Ändern des in Konflikt stehenden Multicast-Routing-Upstream-Labels.

4. Verfahren nach Anspruch 1 oder 2, weiter umfassend:
wenn das Multicast-Routing-Upstream-Label des anderen Edge-Geräts nicht verwendet wird, Auslösen, dass das Edge-Gerät, das dem in Konflikt stehenden Multicast-Routing-Upstream-Label entspricht, das in Konflikt stehende Multicast-Routing-Upstream-Label ändert.

5. Verfahren nach Anspruch 3 oder 4, weiter umfassend:
nach dem Ändern des in Konflikt stehenden Multicast-Routing-Upstream-Labels, Mitteilen anderer Edge-Geräte.

6. Benutzer-Multicast-Routingvorrichtung, umfassend:
eine Einstellungseinheit, die konfiguriert ist zum Zuweisen (S201)
eines Multicast-Routing-Upstream-Labels zum Multicast-Routing,
und Tragen von Zeitstempelinformationen in dem Multicast-Routing-Upstream-Label, wobei das Multicast-Routing-Upstream-Label zum Angeben von Routing-Informationen eines Multicast-Stroms verwendet wird und die Zeitstempelinformationen zum Angeben von markierter Zeit des Multicast-Routing-Upstream-Labels verwendet werden;
**dadurch gekennzeichnet, dass** es weiter eine Routing-Einheit umfasst, die konfiguriert ist, wenn das Multicast-Routing-Upstream-Label mit einem empfangenen Multicast-Routing-Upstream-Label eines anderen Edge-Geräts in Konflikt steht, zum Verwenden (S202)
eines Multicast-Routing-Upstream-Labels, das Zeitstempelinformationen trägt, deren Zeit für Multicast-Routing früher ist.

7. Vorrichtung nach Anspruch 6, wobei die Routing-Einheit weiter so konfiguriert ist, dass sie, wenn die Zeit in Zeitstempelinformationen, die in Konflikt stehenden Multicast-Routing-Upstream-Labeln entsprechen, gleich ist, ein entsprechendes Multicast-Routing-Upstream-Label zum Multicast-Routing gemäß einer Reihenfolge von Wertgrößen von Internet Protokoll, IP, Adressen von Edge-Geräten auswählt, wobei eine IP-Adresse eines Edge-Geräts eine IP-Adresse eines Edge-Geräts ist, die ein Multicast-Routing-Upstream-Label zuweist.

8. Vorrichtung nach Anspruch 6 oder 7, wobei die Einstellungseinheit weiter so konfiguriert ist, dass sie, wenn das zugewiesene Multicast-Routing-Upstream-Label nicht verwendet wird, das in Konflikt stehende Multicast-Routing-Upstream-Label ändert.

9. Vorrichtung nach Anspruch 6 oder 7, wobei, wenn die Einstellungseinheit weiter so konfiguriert ist, dass sie, wenn das Multicast-Routing-Upstream-Label des anderen Edge-Geräts nicht verwendet wird, auslöst, dass das Edge-Gerät, das dem in Konflikt stehenden Multicast-Routing-Upstream-Label entspricht, das in Konflikt stehende Multicast-Routing-Upstream-Label ändert.

10. Edge-Gerät, das die Vorrichtung nach einem der Ansprüche 6 bis 9 umfasst.

11. Maschinenlesbarer Datenträger, der maschinenausführbare Befehle darauf gespeichert aufweist, die, wenn sie ausgeführt werden, das Benutzer-Multicast-Routing-Verfahren nach einem der Ansprüche 1 bis 5 implementieren.

## Revendications

1. Procédé de routage de multidiffusion d'utilisateur, comprenant :
l'attribution (S201) d'une étiquette amont de routage de multidiffusion à un routage de multidiffusion, et le transport (S201) d'informations d'horodatage dans l'étiquette amont de routage de multidiffusion, dans lequel l'étiquette amont de routage de multidiffusion est utilisée pour indiquer des informations de routage d'un flux de multidiffusion, et les informations d'horodatage sont utilisées pour indiquer un temps marqué de l'étiquette amont de routage de multidiffusion ;
**caractérisé en ce qu'**il comprend en outre, lorsque l'étiquette amont de routage de multidiffusion est en conflit avec une étiquette amont de routage de multidiffusion reçue d'un autre dispositif périphérique, l'utilisation (S202) d'une étiquette amont de routage de multidiffusion transportant des informations d'horodatage dont le temps est antérieur pour un routage de multidiffusion.

2. Procédé selon la revendication 1, comprenant en outre :
lorsque le temps dans les informations d'horodatage correspondant aux étiquettes amont de routage de multidiffusion en conflit est le même, la sélection (S304) d'une étiquette amont de routage de multidiffusion correspondante pour le routage de multidiffusion conformément à un ordre de tailles de valeurs d'adresses de protocole Internet, IP, de dispositifs périphériques, dans lequel une adresse IP d'un dispositif périphérique est une adresse IP d'un dispositif périphérique qui attribue une étiquette amont de routage de multidiffusion.

3. Procédé selon la revendication 1 ou 2, comprenant en outre :
lorsque l'étiquette amont de routage de multidiffusion n'est pas utilisée, la modification de l'étiquette amont de routage de multidiffusion en conflit.

4. Procédé selon la revendication 1 ou 2, comprenant en outre :
lorsque l'étiquette amont de routage de multidiffusion d'un autre dispositif périphérique n'est pas utilisée, le déclenchement du dispositif périphérique correspondant à l'étiquette amont de routage de multidiffusion en conflit pour modifier l'étiquette amont de routage de multidiffusion en conflit.

5. Procédé selon la revendication 3 ou 4, comprenant en outre :
après la modification de l'étiquette amont de routage de multidiffusion en conflit, l'annonce aux autres dispositifs périphériques.

6. Appareil de routage de multidiffusion d'utilisateur, comprenant :
une unité de réglage configurée pour attribuer (S201) une étiquette amont de routage de multidiffusion à un routage de multidiffusion,
et transporter des informations d'horodatage dans l'étiquette amont de routage de multidiffusion, dans lequel l'étiquette amont de routage de multidiffusion est utilisée pour indiquer des informations de routage d'un flux de multidiffusion, et les informations d'horodatage sont utilisées pour indiquer un temps marqué de l'étiquette amont de routage de multidiffusion ;
**caractérisé en ce qu'**il comprend en outre une unité de routage configurée pour, lorsque l'étiquette amont de routage de multidiffusion est en conflit avec une étiquette amont de routage de multidiffusion reçue d'un autre dispositif périphérique, utiliser (S202) une étiquette amont de routage de multidiffusion transportant des informations d'horodatage dont le temps est antérieur pour un routage de multidiffusion.

7. Appareil selon la revendication 6, dans lequel l'unité de routage est en outre configurée pour, lorsque le temps dans les informations d'horodatage correspondant aux étiquettes amont de routage de multidiffusion en conflit est le même, sélectionner une étiquette amont de routage de multidiffusion correspondante pour le routage de multidiffusion conformément à un ordre de tailles de valeurs d'adresses de protocole Internet, IP, de dispositifs périphériques, dans lequel une adresse IP d'un dispositif périphérique est une adresse IP d'un dispositif périphérique qui attribue une étiquette amont de routage de multidiffusion.

8. Appareil selon la revendication 6 ou 7, dans lequel l'unité de réglage est en outre configurée pour, lorsque l'étiquette amont de routage de multidiffusion n'est pas utilisée, modifier l'étiquette amont de routage de multidiffusion en conflit.

9. Appareil selon la revendication 6 ou 7, dans lequel l'unité de réglage est en outre configurée pour, lorsque l'étiquette amont de routage de multidiffusion d'un autre dispositif périphérique n'est pas utilisée, déclencher le dispositif périphérique correspondant à l'étiquette amont de routage de multidiffusion en conflit pour modifier l'étiquette amont de routage de multidiffusion en conflit.

10. Dispositif périphérique comprenant l'appareil selon l'une quelconque des revendications 6 à 9.

11. Support de stockage lisible par ordinateur comportant des instructions exécutables par ordinateur stockées à l'intérieur, qui lorsqu'elles sont exécutées, mettent en œuvre le procédé de routage de multidiffusion d'utilisateur selon l'une quelconque des revendications 1 à 5.
